# FASCICULE DE BREVET EUROPEEN

(11) **EP 2 545 016 B1**
(45) Date de publication et mention de la délivrance du brevet: **03.06.2015**
(21) Numéro de dépôt: 10709195.1
(22) Date de dépôt: 08.03.2010
(51) Int. Cl.: C05B 7/00, C05D 1/00, C05G 3/00

(54) **COMPOSITION COMPRENANT DE L'HÉMIPOTASSIUM PHOSPHATE.**
ZUSAMMENSETZUNG MIT HEMIKALIUMPHOSPHAT
COMPOSITION INCLUDING HEMIPOTASSIUM PHOSPHATE

(43) Date de publication de la demande: 16.01.2013
(73) Titulaire: Prayon S.A., 4480 Engis (BE)
(72) Inventeur: HALLEUX, Hubert Antoine Joseph Denis, 1800 Vilvorde (BE); VERHELST, Kurt Thierry S, B-2360 Oud-Turnhout (BE); DEROCHETTE, Jean-Michel, B-4520 Wanze (BE); CAPPELLE, Philippe Jacques Myriam, B-4130 Esneux (BE)
(74) Mandataire: De Groote, Christophe
(86) Numéro de dépôt international: PCT/EP2010/052922
(87) Numéro de publication internationale: WO 2011/110212

(56) Documents cités:
- WO-A1-98/47814
- WO-A1-2004/063126
- WO-A1-2010/088264
- WO-A2-01/74740
- BE-A- 661 093
- US-A1- 2010 186 471

## Description

L'invention se rapporte au domaine des phosphates. Plus particulièrement, elle se rapporte à une composition comprenant de l'hémipotassium phosphate. Elle se rapporte également à un procédé de fabrication de ladite composition et à son utilisation pour l'horticulture.

### Description de l'état de la technique

Les orthophosphates, tels que l'hémipotassium phosphate (HKP), sont des composés largement répandus dans l'industrie agro-alimentaire et dans l'agriculture. L'hémipotassium phosphate, de formule KH₅(P0₄)₂, est connu sous l'abréviation HKP.

Dans l'agro-alimentaire, les orthophosphates sont par exemple ajoutés dans des boissons sous la forme de sel de potassium afin de maintenir des taux de potassium suffisamment important dans l'organisme. On connaît ainsi par WO 97/09270 un procédé de préparation d'hémipotassium phosphate comprenant la combinaison d'une source d'ions potassium avec de l'acide phosphorique, dans des proportions équimolaires, le chauffage de la solution obtenue au-dessus de 100°C et son refroidissement sous forte agitation. La solution de HKP est ajoutée dans des boissons en tant qu'agent acidulant. On connaît également par WO 01/74740 une composition fertilisante comprenant de l'hémipotassium phosphate. WO 2004/063126 décrit une composition comprenant de l'hémipotassium phosphate et un second sel de phosphate alcalin tel que du phosphate de calcium.

On connaît également par WO 98/47814 une méthode de production de HKP comprenant une étape de lavage par une solution phosphatée pour améliorer la pureté du produit.

On connaît également par WO 2007/102159 des compositions de fertilisants comprenant un mélange sub-équimolaire d'acide phosphorique et de monopotassium phosphate. Le monopotassium phosphate est en excès par rapport à l'acide phosphorique. On connaît aussi par WO 2010/088264 une composition fertilisante comprenant un acide solide à température ambiante et un composant faiblement basique solide à température ambiante.

L'utilisation du HKP en tant que fertilisant soluble dans l'eau est particulièrement avantageuse dans le secteur de l'horticulture où interviennent des techniques de fertirrigation. L'adjonction d'une source d'acide y est recommandée pour neutraliser les ions bicarbonate lorsque la dureté de l'eau est suffisamment élevée pour provoquer des problèmes d'entartrage et de colmatage du système d'irrigation. Le HKP peut apporter la quantité d'acide nécessaire grâce à son pouvoir acidifiant important tout en conservant les avantages pratiques des fertilisants solides dont la manipulation est plus aisée et moins dangereuse que celle des acides concentrés sous forme liquide.

Le HKP natif tel que décrit dans l'art antérieur présente cependant des problèmes de mauvaise coulabilité et/ou de mottage au stockage. Ces inconvénients sont particulièrement gênants dans le secteur industriel, en particulier dans le secteur horticole. Ceci peut se traduire par une série de problèmes pratiques tant pour le fabricant que pour l'utilisateur final chaque fois qu'il s'agit de transporter ou de doser le produit, de vidanger un silo ou une trémie. En effet, le manque de coulabilité d'un produit solide ou son agglomération lors du stockage peut provoquer l'obturation d'une partie des installations et exiger de longues manipulations de celui-ci par le personnel. Il est donc hautement souhaitable d'avoir du HKP présentant de bonnes propriétés physiques en terme de coulabilité (ou « free flowing ») et présentant une faible tendance au mottage (ou « caking »).

Le but de la présente invention est de fournir une composition d'hémipotassium phosphate réunissant toutes les propriétés physico-chimiques telles qu'exposées ci-dessus, c'est-à-dire un pouvoir acidifiant important, une bonne coulabilité et une faible tendance au mottage lors du stockage.

### Résumé de l'invention

Suivant un premier aspect, la présente invention concerne une composition sous forme de solide divisé comprenant de l'hémipotassium phosphate (HKP) ayant une teneur en P₂O₅ comprise entre 59,0 et 60,8% en poids et au moins un additif alcalin, ledit au moins un additif alcalin ou lorsqu'il y en a plusieurs chacun de ceux-ci étant un composé chimique soluble dans l'eau dont une solution à 1% en poids a un pH supérieur à 7,_caractérisée en ce qu'elle présente un pouvoir acidifiant de minimum 3,5 moles de H⁺/kg, et quand elle est à l'abri de l'humidité ambiante, un indice de coulabilité inférieur à 25 et un indice de mottage inférieur à 50 et en ce que la teneur en additif alcalin est de 0,5 à 4% en poids par rapport à la composition totale. La composition peut également comprendre au moins un autre sel phosphaté. Un sel, est un composé ionique composé de cations et d'anions formant un produit neutre sans charge nette. Le sel phosphaté est un composé dont l'anion comprend un ou plusieurs motifs phosphate dans lequel un atome de phosphore est lié à quatre atomes d'oxygène dont un par une double liaison.

Suivant un autre aspect de l'invention, un procédé de préparation de la composition selon la présente invention est fourni. Ainsi, le procédé de préparation d'une composition selon l'invention comprend les étapes de :
▪ mise à disposition de particules d'hémipotassium phosphate ayant un taux d'humidité inférieur à 3%,
▪ addition d'au moins un additif alcalin, ledit au moins un additif alcalin, ou lorsqu'il y en a plusieurs chacun de ceux-ci, étant un composé chimique soluble dans l'eau dont une solution à 1% en poids a un pH supérieur à 7, la teneur en additif alcalin étant de 0,5 à 4% en poids par rapport à la composition totale.
▪ mélange des particules d'hémipotassium phosphate et dudit au moins un additif alcalin.

Suivant un autre aspect, l'invention se rapporte à l'utilisation de la composition selon la présente invention pour l'horticulture.

La composition selon la présente invention facilite le stockage, la manipulation et le dosage de l'hémipotassium phosphate. En effet, compte tenu de la bonne coulabilité et du faible mottage de la composition solide selon l'invention, l'utilisateur (par exemple l'horticulteur ou un fabricant de mélange prêt à l'emploi) peut facilement échantillonner la composition.

### Brève description des dessins

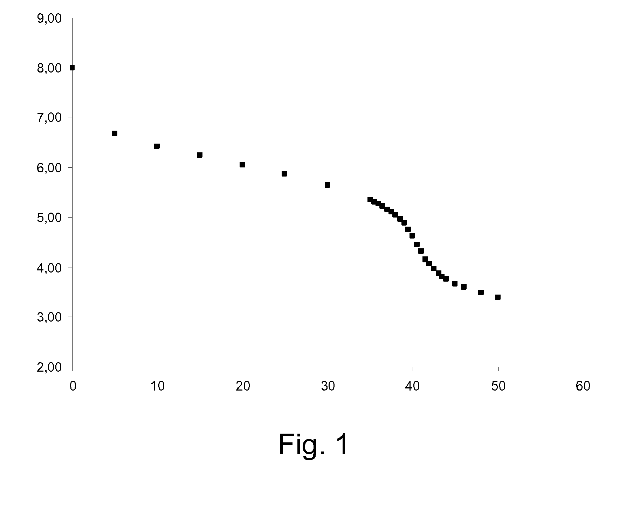

La Fig. 1 représente une courbe de titrage du pouvoir acidifiant d'une composition.

### Description détaillée de l'invention

Dans le cadre de la présente invention, les expressions suivantes doivent être interprétées suivant les définitions données ci-après.

Le terme "coulabilité" tel qu'utilisé dans la présente invention se réfère à la capacité d'un solide divisé à s'écouler à travers un orifice, ledit solide divisé étant statique au départ. La notion de coulabilité se rapporte au produit fraîchement fabriqué avant qu'il ait pu subir un quelconque phénomène de mottage par vieillissement au repos ou sous compression.

Le terme « indice de coulabilité » se réfère à la mesure de coulabilité statique par la méthode dite « Flodex » définie plus bas. Cette méthode est appliquée après avoir délité entièrement le produit par agitation intense.

Le terme « mottage » se réfère à l'aptitude d'un solide divisé à prendre en masse quand il est conservé au repos avec d'éventuelles forces de compression. On peut utiliser indifféremment le terme « prise en masse » ou « mottage ».

Le terme « indice de mottage » tel qu'utilisé dans la présente invention se réfère à la mesure du degré de prise en masse après un certain temps de compression du produit dans des conditions définies plus bas.

Le terme «pouvoir acidifiant» se réfère au nombre de moles d'ions bicarbonate (HCO3⁻) pouvant être neutralisées par 1 kg de la dite composition. Cette propriété, essentielle pour l'utilisation du HKP en horticulture, se mesure par titrage acide-base jusqu'à pH 4,5 où se situe le point d'inflexion de la courbe de titrage. Un exemple typique de courbe est donné à la figure 1. L'axe des ordonnées représente le pH. L'axe des abscisses représente le volume de la solution titrante ajoutée en ml.

Pour rappel, l'invention se rapporte donc à une composition sous forme de solide divisé comprenant de l'hémipotassium phosphate (HKP) ayant une teneur en P₂O₅ comprise entre 59,0 et 60,8% en poids, caractérisée en ce qu'elle présente un pouvoir acidifiant de minimum 3,5 moles de H⁺/kg, et quand elle est à l'abri de l'humidité ambiante un indice de coulabilité inférieur à 25 et un indice de mottage inférieur à 50. L'hémipotassium phosphate, en abrégé HKP, a pour formule KH₅(PO₄)₂ pouvant être également écrite H₃PO₄.KH₂PO₄. Un indice de coulabilité inférieur à 25 et un indice de mottage inférieur à 50 garantissent une manipulation et un dosage aisés de la composition d'HKP et permettent de la conditionner sans risque de prise en masse ou de formation d'agglomérat ou de motte nuisible à la bonne utilisation de ladite composition.

De préférence, ladite composition peut présenter un indice de coulabilité inférieur à 20 quand elle est à l'abri de l'humidité ambiante. De préférence, dans ces mêmes conditions ladite composition peut présenter un indice de mottage inférieur à 20.

Le taux d'humidité de la composition peut être inférieur à 0,5% quand elle est à l'abri de l'humidité ambiante. De préférence, le taux d'humidité de la composition peut être inférieur à 0,3% quand elle est à l'abri de l'humidité ambiante.

La composition peut également contenir au moins un autre sel phosphaté. Ledit au moins un autre sel phosphaté est soluble dans l'eau.

Dans ladite composition, ledit au moins un autre sel phosphaté peut être un sel alcalin, alcalinoterreux ou un sel d'ammonium. Le sel alcalin peut être un sel de sodium, de potassium, de rubidium ou de césium. Le sel alcalinoterreux peut être un sel de calcium ou de magnésium. De préférence, ledit au moins un autre sel phosphaté peut être un sel de potassium.

Ledit au moins un autre sel phosphaté peut être un composé comprenant au moins un groupement fonctionnel de type orthophosphate, pyrophosphate, polyphosphate ou métaphosphate.

Ladite composition peut également contenir au moins un autre sel dont le groupement anionique n'est pas un groupement de type orthophosphate, pyrophosphate, polyphosphate ou métaphosphate.

Ladite composition peut également contenir un dessicant. Ledit dessicant peut être le sulfate de magnésium, le chlorure de calcium ou le gel de silice, sous une forme anhydre ou hydraté. De préférence, le dessicant peut être le sulfate de magnésium anhydre.

Dans ladite composition, la teneur en insolubles est inférieure à 1%, de préférence inférieure à 0,2%.

La composition selon l'invention peut être sous forme d'une poudre dont la plus grande dimension des particules est inférieure à 3 mm. De préférence, l'hémipotassium phosphate peut être sous forme cristalline. La surface de l'hémipotassium phosphate peut être partiellement enrobée par ledit au moins un autre sel phosphaté. Lorsqu'il est analysé par microscopie optique, l'hémipotassium phosphate peut présenter un aspect opaque ou translucide.

Selon un second aspect, l'invention fournit un procédé de préparation de la composition. Ledit procédé de préparation de la composition comprend les étapes de :
▪ mise à disposition d'hémipotassium phosphate ayant un taux d'humidité inférieur à 3%,
▪ addition d'au moins un additif alcalin, ledit au moins un additif alcalin, ou lorsqu'il y en a plusieurs chacun de ceux-ci, étant un composé chimique soluble dans l'eau dont une solution à 1% en poids a un pH supérieur à 7, la concentration en additif alcalin étant comprise entre 0,5 et 4% en poids par rapport à la composition totale
▪ mélange des particules d'hémipotassium phosphate et dudit au moins un additif alcalin.

L'homme du métier sait que les mélanges obtenus en mélangeant des composés de pH très différents présentent souvent un risque de mottage élevé en raison des réactions chimiques acide-base qui s'y produisent, les sels résultants de ces réactions créant des ponts entre les particules des différents constituants. Or, le procédé selon l'invention comprend le mélange d'hémipotassium phosphate (dont le pH d'une solution à 1% est proche de 2,2) avec au moins un additif alcalin. De manière très surprenante et contrairement aux idées reçues, on constate que la composition obtenue selon l'invention après mélange présente un faible mottage. L'invention vainc dès lors un préjugé technique présent depuis longtemps.

L'addition d'au moins un additif alcalin à l'hémipotassium phosphate permet d'obtenir une composition présentant de bonnes propriétés de coulabilité et un très faible mottage. Ces améliorations ne sont pas observées en l'absence d'au moins un additif alcalin. De préférence, l'hémipotassium phosphate mis à disposition peut avoir un taux d'humidité inférieur à 0.5%.

Ledit au moins un additif alcalin peut en partie ou totalement réagir avec l'hémipotassium phosphate pour former au moins un sel phosphaté. Ainsi, la réaction entre ledit au moins un additif alcalin et l'HKP permet la formation d'au moins un autre sel phosphaté. Les compositions selon l'invention présentent ainsi une bonne coulabilité et un faible mottage comme décrit dans les exemples ci-dessous, qui sont décrits en comparant les résultats obtenus avec des compositions selon l'état de la technique.

Selon le procédé de l'invention ledit au moins un additif alcalin peut être prémélangé avec un dessicant. De préférence, le dessicant peut être le sulfate de magnésium anhydre.

Alternativement, ledit procédé peut comprendre également une étape de séchage. Celle-ci peut être préalable à l'étape d'addition dudit au moins un additif alcalin. Alternativement, l'étape de séchage peut être postérieure à l'étape d'addition dudit au moins un additif alcalin.

Le séchage peut être chimique. Ainsi le séchage chimique peut être effectué à l'aide d'un dessicant. Le dessicant peut être choisi parmi le groupe consistant en sulfate de magnésium, chlorure de calcium et silice, sous une forme anhydre ou hydraté. De préférence, le dessicant peut être le sulfate de magnésium anhydre à des proportions de 1 ou 2% par rapport à la composition finale.

Alternativement, le séchage peut être thermique, la composition pouvant atteindre une température inférieure à 125°C lors dudit séchage.

La granulométrie dudit au moins un additif alcalin peut être inférieure à celle de l'hémipotassium phosphate. L'étape de mélange des particules d'hémipotassium phosphate et dudit au moins un additif alcalin peut être effectuée de préférence sous agitation intensive. Le temps de mélange peut être compris entre 5 secondes et 10 minutes, préférentiellement entre 15 secondes et 2 minutes.

Les compositions susceptibles d'être obtenues par le procédé selon la présente invention, ont un taux d'humidité inférieur à 0,5%, de préférence inférieur à 0,3%, lorsqu'elles sont à l'abri de l'humidité ambiante.

Ledit au moins un additif alcalin peut être choisi parmi le groupe consistant en un composé comprenant au moins un groupement fonctionnel de type orthophosphate, pyrophosphate, polyphosphate ou métaphosphate, un oxyde alcalin, et un oxyde alcalinoterreux.

Le terme « métal alcalin » se rapporte aux éléments chimiques de la première colonne du tableau périodique des éléments à l'exclusion de l'hydrogène et du lithium. Ainsi, le métal alcalin peut être Na, K, Rb, ou Cs.

Le terme « oxyde alcalin » se rapporte aux oxydes de sodium Na₂O, de potassium K₂O, de rubidium Rb₂O ou de césium Cs₂O.

Le terme « oxyde alcalinoterreux » se rapporte aux oxydes de calcium CaO, de magnésium MgO, de strontium SrO ou de baryum BaO.

Le terme « ammonium » se rapporte au groupement NH₄⁺.

De préférence, ledit au moins un additif alcalin peut être un composé comprenant au moins un groupement fonctionnel de type orthophosphate, pyrophosphate, polyphosphate ou métaphosphate.

Ainsi, ledit au moins un additif alcalin peut être un sel de formule AₓH₃₋ₓPO₄, A_{y}H_{4-y}P₂O₇ ou A_{z}H_{5-z}P₃O₁₀ dans laquelle

x est 2 ou 3,

y est 3 ou 4,

z est 3, 4 ou 5,

A est un cation de degré d'oxydation +1.

De préférence, A peut être un métal alcalin au degré d'oxydation +1 ou un groupement ammonium.

En particulier, ledit au moins un additif alcalin peut être choisi parmi le groupe consistant en tripotassium phosphate, dipotassium phosphate, tétrapotassium pyrophosphate, et potassium tripolyphosphate et les sels sodiques et ammoniques correspondants. De préférence, ledit au moins un additif alcalin peut être le tripotassium phosphate ou le sel sodique ou ammonique correspondant. Plus préférentiellement, l'additif alcalin peut être le tripotassium phosphate.

Ledit au moins un additif alcalin, ou lorsqu'il y en a plusieurs chacun de ceux-ci, est ajouté dans une proportion comprise entre 0,5 et 4% en poids, indépendamment de la présence et de la proportion d'autres sels. Le pouvoir acidifiant de la composition ne sera pas au-dessous de 3,5 moles H⁺/kg.

Au cours du procédé selon l'invention la composition comprenant l'hémipotassium phosphate et l'additif alcalin ne peut pas avoir un taux d'humidité supérieur à 3%.

L'hémipotassium phosphate peut être chauffé à une température inférieure à 125°C. Ainsi l'hémipotassium reste à l'état solide.

L'hémipotassium de phosphate (HKP) tel que mis à disposition dans le procédé selon l'invention peut être produit selon les procédés connus de l'homme du métier. Des exemples de procédés sont notamment divulgués dans les demandes de brevet WO 97/09270, WO 98/47814 ou WO 2007/102159 précitées dans la partie introductive du présent document.

Selon un autre aspect de la présente invention, les compositions peuvent être utilisées en horticulture. En particulier, elles peuvent être utilisées pour la fertirrigation ou la fertilisation d'un milieu de culture.

### Exemples

### Méthode de détermination de l'indice de coulabilité

L'indice de coulabilité est déterminé par la méthode dite « Flodex » et mesuré à l'aide d'un instrument « Flodex Powder Flowability Tester » développé par Hanson Research. Cet appareil de mesure est disponible sur le marché et fournit des résultats quantitatifs que l'on peut facilement reproduire sans devoir recourir à une poudre de référence. L'indice de coulabilité correspond au diamètre (en mm) de l'orifice le plus étroit au travers duquel le produit s'écoule librement lors de trois essais successifs, une nouvelle prise d'essai étant chaque fois utilisée. Cela signifie que la coulabilité d'un produit s'améliore quand son indice de coulabilité diminue. Dans le cadre de la présente invention, l'échantillon prélevé est agité intensément juste avant le remplissage de la cellule Flodex pour être certain de bien dissocier les problèmes d'écoulement et de mottage.

### Méthode de détermination du mottage en sac industriel

Le mottage peut être évalué dans des sacs industriels. Chaque test s'effectue alors sur six sacs en LDPE non micro-perforés de poids nets identiques entre 20 et 25 kg selon la densité apparente du produit. Les sacs sont soumis à une pression de 0,3 bar pendant 1 mois. L'évaluation finale fait appel à une procédure standardisée. L'état de mottage des six sacs est évalué par trois personnes indépendantes de manière à garantir l'objectivité du test. Chaque examinateur effectue l'évaluation en trois étapes de même importance :
- dureté du sac par simples pressions du pouce,
- résistance mécanique du sac par manipulation du sac entier avec si nécessaire une seule chute de hauteur déterminée,
- ouverture du sac afin d'apprécier la taille et la dureté des morceaux résiduels, le cas échéant.

La cotation finale, qui s'obtient par un calcul de moyennes, s'échelonne de 0 à 3, des nuances intermédiaires étant possibles. Ses nuances peuvent être exprimées comme suit :
- absence totale de mottage = 3 ;
- niveau de mottage acceptable pour des domaines d'application où les propriétés physiques du produit sont peu critiques = 2;
- degré de mottage inacceptable quel que soit le secteur de marché envisagé = 1 ;
- état de mottage dramatique = 0.

Différents échantillons de compositions testées couvrant une large gamme d'indices de mottage ont été également évalués par le test standardisé en sacs industriels. La base de données ainsi constituée a permis de calibrer l'indice de mottage et d'identifier l'indice de mottage maximum qui garantit un comportement au stockage acceptable sur le terrain.

### Méthode de détermination quantitative de l'indice de mottage

La mesure de l'indice de mottage est obtenue par un test de laboratoire mis au point par les inventeurs, pour quantifier la tendance au mottage d'une composition. Cet indice a pour rôle de refléter le comportement de la composition et ainsi de la caractériser. Le test vise à quantifier le degré de mottage du produit analysé par une mesure dynamométrique après un cycle de compression de 5 jours dans une cellule cylindrique. La cellule est portée à 40°C pendant 3 fois 8 heures sur la durée du cycle de compression, la cellule étant à température ambiante (c.à.d. entre 18 et 25°C) le reste du temps. Le cycle de compression débute et se termine toujours par minimum 16 heures de séjour à température ambiante. La cellule de compression comprend deux demi cylindres en acier inoxydable (obtenus en coupant un tube suivant sa médiane longitudinale) qui sont maintenus fermés autour d'un disque à l'aide d'un carcan amovible. Le disque, qui est également en acier inoxydable, ferme le cylindre à sa base. Il a un diamètre de 46 mm et une hauteur de 10 mm. Le cylindre a une hauteur de 80 mm. Le carcan et les deux demi cylindres se retirent aisément sans devoir secouer le disque. Un piston en polypropylène, qui coulisse librement à l'intérieur du cylindre et qui est surmonté d'un poids de 6 kg, vient comprimer le produit par le haut. Le piston a un diamètre de 44 mm et une hauteur de 30 mm. L'ensemble du montage (hormis le poids de 6 kg) est emballé dans un sachet en LDPE (Low density polyethylene) transparent et soudé de manière à empêcher l'absorption d'humidité ambiante tout au long du test. L'étanchéité du sachet est vérifiée par gravimétrie, le poids net de l'échantillon prélevé ne pouvant pas varier de plus de 0,1% sur la durée du test. On veillera à un remplissage homogène de la cellule en effectuant cette opération de façon progressive tout en faisant tourner la cellule sur elle-même pour améliorer la symétrie. Le produit est tassé à l'aide du piston avant la fin du remplissage pour empêcher un tassement excessif lors du cycle de compression lui-même. La masse de la composition varie ainsi entre 90 et 120 g. Le haut du piston doit dépasser du cylindre pendant toute la durée du cycle de compression, sans quoi le poids n'exercerait pas la pression attendue sur le produit (0,36 bar). On veillera aussi à ce que le poids soit parfaitement centré par rapport au piston. Le tout est maintenu parfaitement au repos pendant la phase de compression. La mesure dynamométrique est effectuée au plus tard 4 heures après la phase de compression. Après avoir retiré le carcan et les deux demi cylindres en veillant à ne pas secouer le gâteau de produit, on procède à la mesure dynamométrique en venant appuyer avec une pointe métallique au centre du piston. L'avancement de la pointe est piloté par le banc dynamométrique à une vitesse constante de 60 mm / minute. Le dynamomètre mesure la force de rupture du gâteau. Cette force exprimée en Newton (N) correspond à l'indice de mottage (exprimé sous forme d'une valeur absolue). Ce dernier vaut 0 si le produit coule au moment du démoulage ou si le gâteau vient à s'effondrer entre le démoulage et la mesure dynamométrique.

### Détermination du pouvoir acidifiant

Le pouvoir acidifiant de la composition est déterminé comme suit : 1 litre de solution NaHCO3 (pour analyse) ayant une concentration de 4 mM est titrée par une solution contenant 23,4 g/l de la dite composition. Le titrage se termine au point d'inflexion situé à pH 4,5 (figure 1). Le pouvoir acidifiant exprimé en moles d'ions H⁺ par kg de produit (PA) se calcule de la manière suivante : PA = 4000 / (23,4 x V) où V est le volume de solution titrante en ml.

### Détermination de l'alcalinité d'un additif alcalin

On parle d'additif alcalin si le pH de cette solution aqueuse à 1% en poids est supérieur à 7. Le degré d'alcalinité des additifs alcalins est déterminé en mesurant le pH d'une solution aqueuse à 1% en poids.

### Etude par microscopie optique

L'étude par microscopie optique a été effectuée sur des particules déposées sur une plaque de verre. Le mode d'éclairage est réglé de manière à pouvoir comparer le degré de transparence des particules d'un échantillon à l'autre.

### Exemple 1 selon l'état de la technique

L'exemple 1 reproduit un procédé divulgué dans la demande de brevet WO 98/47814 et décrivant la fabrication d'hémipotassium phosphate par un procédé de cristallisation en suspension avec séparation solide/liquide. L'essai a été effectué en condition pilote. La solution d'acide phosphorique purifiée, titrant 85% d'H₃PO₄, et la solution de KOH 50% étaient alimentées en continu dans l'appareil d'évaporation. La cristallisation était conduite en suspension agitée à une température de 55 - 65 °C et un vide de 695 - 715 mm Hg. En régime stationnaire, la concentration en cristaux de la suspension fluctuait entre 10 et 20% en poids. L'eau mère de cristallisation avait un rapport molaire K/P de 0,42. Les cristaux séparés à l'aide d'une essoreuse centrifuge étaient ensuite débarrassés de leur eau d'imprégnation dans un sécheur flash où la température de l'air était proche de 115°C. Les caractéristiques analytiques principales du produit obtenu sont reprises ci-dessous :
Teneur en P2O5 : 60,7% en poids
Teneur en K2O : 19,6 % en poids
Rapport molaire K / P : 0,488
Pouvoir acidifiant : 4,30 moles H⁺ / kg
Teneur en insolubles : < 0,01 % en poids
Perte de poids à 105 °C : 0,18 % en poids
Refus sur tamis de 1 mm : 26%
Refus sur tamis de 3 mm : 0,0%

L'analyse cristallographique par diffraction des rayons X (technique des poudres) effectuée par les inventeurs a montré la présence d'une seule phase, en l'occurrence le KH₅(PO₄)₂ (HKP). Au microscope optique, les cristaux en question se caractérisent par une transparence absolue. Le produit résultant est caractérisé par une très mauvaise coulabilité, son indice de coulabilité étant supérieur à 38. Ayant une apparence humide quel que soit son degré de séchage, il s'agglomère très facilement et tend ainsi à former des ponts au sein des appareils. Cela peut se traduire par toute une série de problèmes pratiques tant pour le fabricant que pour l'utilisateur final chaque fois qu'il s'agit de transporter ou de doser le produit, de vidanger un silo ou une trémie. Un séchage supplémentaire du produit pendant 30 minutes dans un lit fluidisé de laboratoire à 120°C n'améliore pratiquement pas sa coulabilité, l'indice de coulabilité étant alors de 35. Cependant, l'indice de mottage, qui a une valeur de 22, se situe dans un domaine acceptable pour une utilisation sur le terrain. Ce résultat a d'ailleurs été confirmé par des tests de mottage en sacs industriels : la cotation moyenne selon la procédure standardisée était de 2. L'hémipotassium phosphate obtenu par le procédé décrit dans cet art antérieur montre une très faible coulabilité, empêchant son utilisation industrielle ultérieure.

### Exemple 2 selon l'état de la technique

Dans l'exemple ci-présent, les cristaux de l'exemple 1 ont été lavés avant séchage par diverses solutions phosphatées non alcalines comme le suggérait aussi la demande de brevet WO 98/47814. Cette étape supplémentaire de lavage a été effectuée soit dans l'essoreuse centrifuge elle-même, soit sur un filtre sous vide de laboratoire. Le séchage final a eu lieu dans un lit fluidisé de laboratoire. L'humidité finale de tous les échantillons (perte de poids à 105°C) était ainsi inférieure à 0,2 %. Aucun de ces essais de lavage n'a permis d'améliorer la coulabilité du produit final, l'indice de coulabilité étant chaque fois supérieur à 38.

### Exemple 3 selon l'état de la technique

L'exemple 3 reproduit un procédé de fabrication d'hémipotassium phosphate décrit dans la demande de brevet WO 2007/102159. On remarque que cette demande de brevet ne donne aucune indication quantitative quant au mottage. Ce procédé effectue l'étape de cristallisation dans un mélangeur sans séparation solide/liquide avec un excès de monopotassium phosphate KH₂PO₄ par rapport à l'acide phosphorique H₃PO₄. L'exemple 1 de la demande WO 2007/102159 a été reproduit dans un mélangeur-sécheur de 10 litres utiles. Le rapport molaire K/P du produit résultant qui a été confirmé par deux méthodes d'analyse différentes atteint une valeur de 0,54 conformément au mélange H₃PO4 - KH₂PO₄ sub-équimolaire en H₃PO₄ qui est évoqué dans la demande de brevet. L'humidité résiduelle (perte de poids après 2 heures à 105°C) était inférieure à 0,2%. L'analyse élémentaire approfondie, dont les résultats figurent ci-dessous, confirme l'absence d'autres impuretés en concentrations importantes : Al < 1 ppm ; Ca = 25 ppm ; Cl < 2 ppm ; Fe < 1 ppm ; Mg < 1 ppm ; Na = 97 ppm ; SiO2 = 35 ppm ; SO4 = 9,4 ppm ; TOC = 5,4 ppm. Les inventeurs ont analysé le produit par diffraction des rayons X (technique des poudres). Celle-ci révèle la présence de deux phases cristallines en quantités très différentes, les phases majoritaire et minoritaire étant respectivement le KH₅(PO₄)₂ (HKP) et le KH₂PO₄ (MKP), corroborant ainsi l'analyse élémentaire globale. Le produit présente une bonne coulabilité avec un indice de coulabilité de 8, l'indice ayant été déterminé par les inventeurs suivant la méthode dite Flodex. Cependant, le produit motte très facilement au repos ou sous l'effet d'une compression prolongée. Le mottage est donc mauvais. Ceci a été vérifié et déterminé par les inventeurs de deux manières différentes. Dans un flacon fermé au repos, le mottage apparaissait en moins de 5 jours à température ambiante. Dans les cellules de compression, l'indice de mottage atteignait une valeur de 220. La tendance au mottage est donc nettement supérieure à celle de l'exemple 1 malgré la meilleure coulabilité du produit du présent exemple 3. Cette comparaison confirme que la coulabilité et le mottage sont deux propriétés indépendantes l'une de l'autre. Une bonne coulabilité ne va pas nécessairement de paire avec une bonne résistance au mottage et vice versa. Ceci illustre la complexité du problème et le caractère imprévisible des propriétés physiques que l'on a pu obtenir, suivant l'état de la technique, en modifiant le mode de fabrication du HKP.

### Exemple 4 selon l'état de la technique

L'exemple 1 de la demande de brevet WO 97/09270 a été reproduit au laboratoire. Le rapport molaire K/P de l'échantillon résultant était de 0,50 comme celui du HKP pur. Contrairement à l'exemple 3 décrit dans la présent document, la composition de l'exemple 4 du présent document correspondait donc à un mélange MKP / H₃PO₄ quasi équimolaire. Les propriétés physiques étaient cependant peu différentes. Le mottage était également excessif (indice de mottage = 135) malgré une assez bonne coulabilité (indice de coulabilité = 20). Le problème de mottage apparaissait aussi en moins de 5 jours dans un simple flacon fermé au repos.

Les exemples 1 à 4 présentés ci-dessus mettent clairement en évidence la difficulté d'obtention d'hémipotassium phosphate possédant à la fois de bonnes propriétés de coulabilité (indice de coulabilité inférieur à 25) et un faible mottage (indice de mottage inférieur à 50).

### Exemple 5 selon l'invention

Des cristaux d'hémipotassium obtenu par un procédé tel que décrit dans l'exemple 1 du présent document ont été refroidis et conservés à l'abri de l'humidité ambiante. L'hémipotassium phosphate a été traité par addition de K₃PO₄ (tripotassium phosphate - TKP) à température ambiante. Le pH du TKP en solution aqueuse à une concentration pondérale de 1% est de 12,2. La source de TKP utilisée était de qualité technique et se présentait sous forme de poudre fine. Les opérations de mélange ont été réalisées de façon batch dans un mélangeur intensif de laboratoire. L'addition de TKP, effectuée de manière instantanée, a été suivie d'un temps de mélange variable. Le taux d'addition était également variable. L'effet sur la coulabilité de la poudre était immédiat à un taux d'addition de 2% ou plus. Avec un temps de mélange de 15 secondes, l'indice de coulabilité mesuré juste après mélange était déjà inférieur à 10. La composition ainsi obtenue a été conservée à l'abri de l'humidité ambiante ; son indice de coulabilité est resté ainsi inchangé pendant plus de 6 mois. Les tests de mottage sous pression ont démarré juste après mélange.

La résistance au mottage est également excellente. Un temps de mélange de 15 secondes a suffi pour atteindre un indice de mottage inférieur à 5 de façon reproductible. Un indice de 0 est atteint après 1 minute de mélange. Aucun mottage n'est observé dans un flacon fermé après un temps de repos de plus de 6 mois à température ambiante. Par contre, une fois que le produit a absorbé de l'humidité, par exemple au contact de l'air ambiant, la tendance au mottage s'inverse totalement et devient même très nettement supérieure à celle du HKP natif c'est-à-dire avant l'addition de l'additif alcalin. Les indices de mottage obtenus étant alors supérieurs à 300. L'addition de TKP doit donc aller de pair avec un mode d'emballage du produit étanche à la vapeur d'eau, tel que par exemple un sac en LDPE non micro-perforé d'épaisseur suffisante. L'homme du métier saura déterminer le meilleur mode d'emballage en fonction de son utilisation.

Lorsque la composition de l'exemple 5 selon l'invention est observée au microscope optique, les particules résultantes ne sont pas transparentes comme des particules de HKP natif connu de l'état de la technique. Ceci semble indiquer que dans la composition de l'exemple 5 un sel de phosphate autre que l'hémipotassium phosphate se dépose à la surface des particules d'hémipotassium phosphate. Il semblerait que ce dépôt couvre au moins partiellement la surface des particules d'hémipotassium phosphate et sa composition semble évoluer avec le temps. Sans vouloir être lié par la théorie, on peut penser que le dépôt observé pourrait être du monopotassium phosphate formé *in situ* par la neutralisation du tripotassium phosphate. Néanmoins la subsistance partielle de tripotassium phosphate ou de dipotassium phosphate alcalin n'est pas exclue vu la faible teneur en eau du mélange. Avec une proportion de 3% de tripotassium phosphate, le pouvoir acidifiant du mélange résultant est de 3,95, ce qui offre donc un excellent compromis entre les propriétés chimiques et physiques de la formule.

### Exemple 6 selon l'invention

Le mode opératoire de l'exemple 5 selon l'invention a été appliqué au cas où l'additif alcalin est le K₄P₂O₇ (TKPP - tétrapotassium pyrophosphate). Le pH du TKPP en solution aqueuse à une concentration pondérale de 1% est égale à 10,5. Un bon indice de coulabilité a été observé en présence de TKPP à une proportion de 3% en poids. Après 30 secondes de mélange intensif, l'indice de coulabilité (Méthode Flodex) était de 22. La valeur de l'indice de coulabilité a diminué progressivement pour atteindre 18 après 1 heure et 10 après 5 jours de mûrissement au repos. Après plusieurs semaines, l'indice de coulabilité s'est stabilisé à une valeur de 7 proche de celle obtenue avec le TKP juste après mélange. Par observation au microscope optique, l'aspect des particules après addition s'avère similaire selon que le phosphate alcalin ajouté soit le TKP ou le TKPP. Après un temps de mélange de 30 secondes, l'indice de mottage atteint une valeur de 27 dans le cas du TKPP. Un très faible mottage est donc observé.

### Exemple 7 selon l'invention

Le mode opératoire de l'exemple 5 selon l'invention a été appliqué au cas de la chaux vive (CaO) en tant qu'additif alcalin. L'addition de chaux vive à raison de 1 % en poids a aussi permis d'obtenir un indice de coulabilité de la composition inférieur à 10 après plusieurs jours et de 22 après une journée. L'indice de mottage atteignait une valeur de 28. A 1 % de CaO, le pouvoir acidifiant résultant est de 3,94.

### Exemple 8 comparatif

À titre de contre-exemple, on a mis en oeuvre un procédé de préparation de HKP ne relevant pas de l'invention. Dans ce procédé d'autres types d'additifs, non alcalins cette fois, ont été testés en utilisant un mode opératoire identique à celui de l'exemple 5 selon l'invention. On observe que les sels de type KH₂PO₄ (MKP) et K₂SO₄ n'ont pas effet sur la coulabilité à des taux d'addition de 1 à 5%. Dans le cas du MKP, l'absence d'effet sur la coulabilité a été confirmé jusqu'à un taux d'addition de 10% et à différentes granulométries du MKP, en cela compris un MKP finement broyé tout passant à 150 µm. Enfin, le MgSO₄ anhydre dosé à 2% conduit à un indice de coulabilité de 35 grâce à son effet dessicant, mais son effet fluidifiant reste nettement inférieur à celui des additifs alcalins à dosage identique, y compris après un long temps de mûrissement.

### Exemple 9 selon l'invention

D'autres essais ont été réalisés en ajoutant 3% de TKP au HKP chaud fraîchement prélevé à la sortie du sécheur flash, le mode opératoire de fabrication du HKP étant celui de l'exemple 1. Le HKP était à une température d'environ 50 - 60°C au moment de l'addition. Le TKP était par contre à température ambiante, le mode opératoire étant par ailleurs identique à celui de l'exemple 5. Les tests de mottage ont démarré immédiatement après mélange, c'est à dire à une température d'à peu près 50°C. Cela signifie que le produit était déjà comprimé dans la cellule de compression pendant sa phase de refroidissement. Différents essais ont été réalisés en faisant varier le temps de mélange entre 5 secondes et 2 minutes : l'indice de coulabilité résultant était toujours inférieur à 10. L'indice de mottage s'améliorait en allongeant le temps de mélange. Ainsi, l'indice de mottage était de 32, 12, 3 et 0 après un temps de mélange de respectivement 5 secondes, 15 secondes, 1 minute et 2 minutes.

### Exemple 10 selon l'invention

Le produit issu du procédé de l'exemple 1 a été traité avec une proportion de TKP de 3% après refroidissement. La granulométrie du TKP était identique à celle de l'exemple 5. L'addition a été effectuée de façon discontinue et à température ambiante (10°C) dans un mélangeur rotatif de 150 litres utiles avec un temps de mélange de 10 minutes. La composition obtenue a présenté une excellente coulabilité avec un indice de coulabilité de 6. Les tests de mottage ont eu lieu immédiatement après mélange tant pour les tests en cellules de compression que pour les tests en sacs industriels. Aucun mottage n'a été constaté. L'indice de mottage était de 0 au laboratoire et la cotation moyenne était de 3 dans l'évaluation standardisée des sacs industriels.

### Exemple 11 selon l'invention

Le produit issu du procédé de l'exemple 1 a été traité avec une proportion de TKP de 3% en effectuant le mélange de manière continue directement à la sortie du sécheur. Les cristaux de HKP non refroidis étaient à une température approximative de 80°C. Le mélange s'effectuait pendant le transport du produit, c'est-à-dire sans appareil de mélange spécifique. L'indice de coulabilité de la composition s'est situé entre 5 et 9, et l'indice de mottage entre 6 et 7. La cotation moyenne était de 3 lors de l'évaluation standardisée des sacs industriels. Les caractéristiques analytiques de la composition étaient de :
Teneur en P2O5 : 59,8 % en poids
Teneur en K2O : 20,9 % en poids
Rapport molaire K / P : 0,528
Pouvoir acidifiant : 3,96 moles H⁺ / kg
Teneur en insolubles : 0,01 % en poids
Perte de poids à 105 °C : 0,17 % en poids
Refus sur tamis de 500 µm : 60%
Refus sur tamis de 1 mm : 22%
Refus sur tamis de 3 mm : 0,0%
L'aspect de la composition au microscope optique était similaire à celui de l'exemple 5 selon l'invention.

### Exemple 12 selon l'invention

Les cristaux de HKP utilisés pour le présent exemple étaient ceux issus de l'exemple 1. L'additif alcalin, le tripotassium phosphate (TKP) dans une proportion de 3% en poids, a été additionné avant le séchage des cristaux. Les cristaux humides, dont la perte de poids à 105°C s'élevait à 0,9%, ont été prélevés à la sortie de l'essoreuse centrifuge. L'opération de mélange a été réalisée à l'aide d'un mélangeur intensif de laboratoire comme dans l'exemple 5. L'addition de TKP, effectuée de manière instantanée, était suivie d'un temps de mélange de 2 minutes. Avant séchage, l'indice de coulabilité du mélange était de 38. L'étape de séchage a duré 2 minutes dans un lit fluidisé de laboratoire dont le débit d'air porté à 90°C a été réglé de manière à ce que le produit soit fluidisé dès le début de l'opération. Après séchage, le mélange final atteignait un indice de coulabilité de 15 et un indice de mottage de 22.

### Exemple 13 selon l'invention

Les conditions opératoires sont identiques à celles de l'exemple 12. Du sulfate de magnésium anhydre (MgSO₄), a été ajouté dans une proportion de 2% en poids par rapport aux cristaux de HKP. Le sulfate de magnésium a été pré-mélangé au tripotassium phosphate avant l'étape d'addition aux cristaux de HKP. Tant la coulabilité (indice de coulabilité = 7) que la résistance au mottage (indice de mottage = 0) ont été améliorées.

### Exemple 14 selon l'invention

Le mode opératoire de l'exemple 5 a été également appliqué au produit de l'exemple 4, qui est issu d'un procédé de cristallisation en mélangeur sans étape de séparation solide/liquide. La proportion de tripotassium phosphate (TKP) additionné était de 3% en poids. Des temps de mélange de 15 secondes ou de 1 minute ont fourni des résultats pratiquement identiques. Avant l'addition de TKP, l'indice de coulabilité était de 20 et l'indice de mottage était de 135. Après l'addition de TKP, l'indice de coulabilité était de 8 et l'indice de mottage de 22.

Grâce à l'invention, et contrairement au préjugé de l'homme du métier, les inventeurs ont ainsi montré, que de manière surprenante, il est possible d'obtenir pour un seul et même produit de bons résultats pour les trois caractéristiques suivantes : pouvoir acidifiant, indice de coulabilité et indice de mottage. Ceci n'a jamais été obtenu pour un seul et même produit de l'état de la technique et ne découlait pas à l'évidence de l'état de la technique pour un homme du métier.

## Revendications

1. Composition sous forme de solide divisé comprenant de l'hémipotassium phosphate (HKP) ayant une teneur en P₂O₅ comprise entre 59,0 et 60,8% en poids et au moins un additif alcalin, ledit au moins un additif alcalin ou lorsqu'il y en a plusieurs chacun de ceux-ci étant un composé chimique soluble dans l'eau dont une solution à 1% en poids a un pH supérieur à 7, **caractérisée en ce qu'**elle présente un pouvoir acidifiant de minimum 3,5 moles de H⁺/kg et, quand elle est à l'abri de l'humidité ambiante, un indice de coulabilité inférieur à 25 et un indice de mottage inférieur à 50 ; et **en ce que** la teneur en additif alcalin est de 0,5 à 4% en poids par rapport à la composition totale.

2. Composition selon la revendication 1, **caractérisée en ce que** le taux d'humidité de ladite composition est inférieur à 0,5%, quand elle est à l'abri de l'humidité ambiante.

3. Composition selon l'une quelconque des revendications 1 à 2 **caractérisée en ce qu'**elle comprend également au moins un autre sel phosphaté issu de la réaction entre l'au moins un additif alcalin et l'hémipotassium phosphate.

4. Composition selon l'une quelconque des revendications 1 à 3 **caractérisée en ce qu'**elle comprend également un dessicant.

5. Composition selon l'une quelconque des revendications 1 à 4, **caractérisée en ce que** la teneur en insolubles est inférieure à 1%.

6. Procédé de préparation d'une composition selon l'une quelconque des revendications précédentes, **caractérisé en ce qu'**il comprend les étapes de :
a. mise à disposition d'hémipotassium phosphate ayant un taux d'humidité inférieur à 3%,
b. addition d'au moins un additif alcalin, ledit au moins un additif alcalin, ou lorsqu'il y en a plusieurs chacun de ceux-ci, étant un composé chimique soluble dans l'eau dont une solution à 1% en poids a un pH supérieur à 7, la concentration en additif alcalin est comprise entre 0.5 et 4 % en poids par rapport à la composition totale,
c. mélange des particules d'hémipotassium phosphate et dudit au moins un additif alcalin.

7. Procédé selon la revendication 6 **caractérisé en ce que** l'hémipotassium phosphate mis à disposition a un taux d'humidité inférieur à 1%.

8. Procédé selon la revendication 6 ou 7 **caractérisé en ce que** ledit au moins un additif alcalin est prémélangé avec un dessicant.

9. Procédé selon la revendication 6 ou 8 **caractérisé en ce qu'**il comprend également une étape de séchage.

10. Procédé selon l'une quelconque des revendications 6 à 9, **caractérisé en ce que** ledit au moins un additif alcalin est choisi parmi le groupe consistant en un composé comprenant au moins un groupement fonctionnel de type orthophosphate, pyrophosphate, polyphosphate ou métaphosphate, un oxyde alcalin, et un oxyde alcalinoterreux.

11. Procédé selon l'une quelconque des revendications 6 à 10, **caractérisé en ce que** ledit au moins un additif alcalin est un sel de formule AₓH₃₋ₓPO₄, A_{y}H_{4-y}P₂O₇ ou A_{z}H_{5-z}P₃O₁₀ dans laquelle
x est 2 ou 3,
y est 3 ou 4,
z est 3, 4 ou 5,
A est un cation de degré d'oxydation +1.

12. Procédé selon l'une quelconque des revendications 6 à 11 **caractérisé en ce que** ledit au moins un additif alcalin est choisi parmi le groupe consistant en tripotassium phosphate, dipotassium phosphate, tétrapotassium pyrophosphate, et potassium tripolyphosphate et les sels sodiques et ammoniques correspondants.

13. Utilisation de la composition selon l'une quelconque des revendications 1 à 5 pour l'horticulture.

## Patentansprüche

1. Zusammensetzung in Form eines geteilten Feststoffs, umfassend Hemikaliumphosphat (HKP) mit einem P₂O₅-Gehalt zwischen 59,0 und 60,8 Gew.-% und mindestens ein alkalisches Additiv, wobei das mindestens eine alkalische Additiv oder dann, wenn mehrere davon vorliegen, jedes davon eine wasserlösliche chemische Verbindung ist, deren 1 gew.-%ige Lösung einen pH-Wert von mehr als 7 hat, **dadurch gekennzeichnet, dass** sie ein Ansäuerungsvermögen von mindestens 3,5 mol H⁺/kg und unter Ausschluss von Umgebungsfeuchtigkeit einen Fließfähigkeitsindex von weniger als 25 und einen Klumpigkeitsindex von weniger als 50 aufweist und dass der Gehalt an alkalischem Additiv 0,5 bis 4 Gew.-%, bezogen auf die gesamte Zusammensetzung, beträgt.

2. Zusammensetzung nach Anspruch 1, **dadurch gekennzeichnet, dass** der Feuchtigkeitsgehalt der Zusammensetzung unter Ausschluss von Umgebungsfeuchtigkeit weniger als 0,5% beträgt.

3. Zusammensetzung nach einem der Ansprüche 1 bis 2, **dadurch gekennzeichnet, dass** sie außerdem mindestens ein anderes Phosphatsalz, das aus der Reaktion zwischen dem mindestens einen alkalischen Additiv und Hemikaliumphosphat hervorgeht, umfasst.

4. Zusammensetzung nach einem der Ansprüche 1 bis 3, **dadurch gekennzeichnet, dass** sie außerdem ein Trockenmittel umfasst.

5. Zusammensetzung nach einem der Ansprüche 1 bis 4, **dadurch gekennzeichnet, dass** der Gehalt an unlöslichen Substanzen weniger als 1% beträgt.

6. Verfahren zur Herstellung einer Zusammensetzung nach einem der vorhergehenden Ansprüche, **dadurch gekennzeichnet, dass** es folgende Schritte umfasst:
a. Bereitstellen von Hemikaliumphosphat mit einem Feuchtigkeitsgehalt von weniger als 3%,
b. Zugeben von mindestens einem alkalischen Additiv, wobei das mindestens eine alkalische Additiv oder dann, wenn mehrere davon vorliegen, jedes davon eine wasserlösliche chemische Verbindung ist, deren 1 gew.-%ige Lösung einen pH-Wert von mehr als 7 hat, wobei die Konzentration an alkalischem Additiv zwischen 0,5 und 4 Gew.-%, bezogen auf die gesamte Zusammensetzung, liegt,
c. Mischen der Hemikaliumphosphat-Teilchen und des mindestens einen alkalischen Additivs.

7. Verfahren nach Anspruch 6, **dadurch gekennzeichnet, dass** das bereitgestellte Hemikaliumphosphat einen Feuchtigkeitsgehalt von weniger als 1% aufweist.

8. Verfahren nach Anspruch 6 oder 7, **dadurch gekennzeichnet, dass** das mindestens eine alkalische Additiv mit einem Trockenmittel vorgemischt wird.

9. Verfahren nach Anspruch 6 oder 8, **dadurch gekennzeichnet, dass** es außerdem einen Trocknungsschritt umfasst.

10. Verfahren nach einem der Ansprüche 6-9, **dadurch gekennzeichnet, dass** das mindestens eine alkalische Additiv aus der Gruppe bestehend aus einer Verbindung mit mindestens einer funktionellen Gruppe vom Orthophosphat-, Pyrophosphat-, Polyphosphat- oder Metaphosphat-Typ, einem Alkalimetalloxid und einem Erdalkalimetalloxid ausgewählt wird.

11. Verfahren nach einem der Ansprüche 6 bis 10, **dadurch gekennzeichnet, dass** es sich bei dem mindestens einen alkalischen Additiv um ein Salz der Formel AₓH₃₋ₓPO₄, A_{y}H_{4-y}P₂O₇ oder A_{z}H_{5-z}P₃O₁₀ handelt, wobei
x für 2 oder 3 steht,
y für 3 oder 4 steht,
z für 3, 4 oder 5 steht,
A für ein Kation in der Oxidationsstufe +1 steht.

12. Verfahren nach einem der Ansprüche 6 bis 11, **dadurch gekennzeichnet, dass** das mindestens eine alkalische Additiv aus der Gruppe bestehend aus Trikaliumphosphat, Dikaliumphosphat, Tetrakaliumpyrophosphat und Kaliumtripolyphosphat und den entsprechenden Natrium- und Ammoniumsalzen ausgewählt wird.

13. Verwendung der Zusammensetzung nach einem der Ansprüche 1 bis 5 für den Gartenbau.

## Claims

1. Composition in the divided solid form comprising hemipotassium phosphate (HKP) having a P₂O₅ content of between 59.0 and 60.8% by weight and at least one alkaline additive, said at least one alkaline additive or, when there are several of these, each of them being a water-soluble chemical compound, a 1% by weight solution of which has a pH of greater than 7, **characterized in that** it exhibits an acidifying power of at least 3.5 mol of H⁺/kg and, when it is sheltered from ambient moisture, a flowability index of less than 25 and a caking index of less than 50; and **in that** the content of alkaline additive is from 0.5% to 4% by weight with respect to the total composition.

2. Composition according to Claim 1, **characterized in that** the moisture content of said composition is less than 0.5%, when it is sheltered from ambient moisture.

3. Composition according to either one of Claims 1 and 2, **characterized in that** it also comprises at least one other phosphate salt resulting from the reaction between the at least one alkaline additive and the hemipotassium phosphate.

4. Composition according to any one of Claims 1 to 3, **characterized in that** it also comprises a dehydrating agent.

5. Composition according to any one of Claims 1 to 4, **characterized in that** the content of insoluble material is less than 1%.

6. Process for the preparation of a composition according to any one of the preceding claims, **characterized in that** it comprises the stages of:
a. making available hemipotassium phosphate having a moisture content of less than 3%,
b. adding at least one alkaline additive, said at least one alkaline additive or, when there are several of these, each of them being a water-soluble chemical compound, a 1% by weight solution of which has a pH of greater than 7, the concentration of alkaline additive being between 0.5% and 4% by weight with respect to the total composition,
c. mixing the hemipotassium phosphate particles and said at least one alkaline additive.

7. Process according to Claim 6, **characterized in that** the hemipotassium phosphate made available has a moisture content of less than 1%.

8. Process according to Claim 6 or 7, **characterized in that** said at least one alkaline additive is premixed with a dehydrating agent.

9. Process according to Claim 6 or 8, **characterized in that** it also comprises a drying stage.

10. Process according to any one of Claims 6 to 9, **characterized in that** said at least one alkaline additive is chosen from the group consisting of a compound comprising at least one functional group of orthophosphate, pyrophosphate, polyphosphate or metaphosphate type, an alkali metal oxide and an alkaline earth metal oxide.

11. Process according to any one of Claims 6 to 10, **characterized in that** said at least one alkaline additive is a salt of formula AₓH₃₋ₓPO₄, A_{y}H_{4-y}P₂O₇ or A_{z}H_{5-z}P₃O₁₀ in which:
x is 2 or 3,
y is 3 or 4,
z is 3, 4 or 5,
A is a cation with a degree of oxidation +1.

12. Process according to any one of Claims 6 to 11, **characterized in that** said at least one alkaline additive is chosen from the group consisting of tripotassium phosphate, dipotassium phosphate, tetrapotassium pyrophosphate and potassium tripolyphosphate, and the corresponding sodium and ammonium salts.

13. Use of the composition according to any one of Claims 1 to 5 in horticulture.
